# EUROPÄISCHE PATENTSCHRIFT

(11) **EP 2 815 857 B1**
(45) Veröffentlichungstag und Bekanntmachung des Hinweises auf die Patenterteilung: **08.06.2016**
(21) Anmeldenummer: 14164402.1
(22) Anmeldetag: 11.04.2014
(51) Int. Cl.: B26D 1/08, B30B 1/26, B26D 5/14, B26D 1/09, B23D 35/00, B26D 7/02, B26D 7/18, B26D 7/26, B26D 7/32

(54) **Schere**
Cutter
Ciseaux

(30) Priorität: 29.05.2013 DE 202013102349 U
(43) Veröffentlichungstag der Anmeldung: 24.12.2014
(73) Patentinhaber: Karl Eugen Fischer GmbH, 96224 Burgkunstadt (DE)
(72) Erfinder: Flieger, Walter, 95326 Kulmbach (DE); Klenner, Ralf, 96272 Hochstadt (DE)
(74) Vertreter: Patentanwälte Olbricht Buchhold Keulertz

(56) Entgegenhaltungen:
- DE-A1- 4 024 615
- DE-B- 1 106 730
- DE-C- 875 139
- DE-U1-202013 103 082
- GB-A- 952 434
- GB-A- 1 096 225
- JP-A- S5 548 500
- SU-A1- 683 917
- US-A- 2 136 856
- US-A- 2 605 836
- US-A- 2 707 996
- US-A- 2 734 572
- US-A- 5 237 901
- US-A1- 2010 269 664

## Beschreibung

Die Erfindung betrifft eine Schere zum Schneiden eines dünnen, klebrigen Bandes. Bei einem derartigen Band handelt es sich insbesondere um ein Band aus klebrigen und dünnen Cordmaterial mit Textil- und/oder Stahldrähten. Die Schere umfasst einen Hauptrahmen, einen vertikal am Hauptrahmen bewegbar gelagerten Messerbalken mit einem Obermesser, eine Tischplatte mit einem Untermesser und einen Antrieb mit einer Antriebswelle zum Erzeugen einer vertikalen Bewegung des Messerbalkens mit dem Obermesser relativ zum Hauptrahmen. Durch eine zwischen Obermesser und Untermesser ausgebildete Messeröffnung kann das Band hindurch geführt werden, um einen Streifen in gewünschter Breite abzuschneiden. Zur Ausführung des Schnitts wird das Obermesser vertikal am Untermesser vorbeigeführt und die Messeröffnung damit geschlossen.

Die Richtungsangaben vertikal beziehungsweise horizontal beziehen sich auf den betriebsbereiten Zustand der Schere, wobei auch keine mathematisch strenge Ausrichtung gefordert ist, sondern geringe Abweichungen zur vertikalen beziehungsweise horizontalen Richtung mit umfasst sind.

Derartige Scheren dienen dazu, dass von einer Vorratsrolle abgezogene und der Schere zugeführte Bandmaterial in einem vorgegebenen Winkel in Streifen zu schneiden, wobei die geschnittenen Materialstreifen anschließend in einer Spleißeinrichtung an ihren schmalen Seiten wieder miteinander verbunden werden. Die so hergestellten Materialbahnen dienen beispielsweise zur Herstellung von Autoreifen, wobei es sich in der Regel um spannungsbehaftete Stahl- bzw. Textilcordbänder handelt.

Zum Schneiden des Bandes weist die Schere ein Obermesser und ein Untermesser auf, zwischen denen eine Messeröffnung ausgebildet ist. Das Obermesser ist dabei an einem vertikal am Hauptrahmen bewegbar gelagerten Messerbalken befestigt, während das Untermesser in der Regel unbeweglich an der Tischplatte befestigt ist. Die Schneidbewegung wird also durch eine vertikal nach unten gerichtete Bewegung des Messerbalkens mit dem Obermesser relativ zum Hauptrahmen und zum Untermesser ausgeführt. Ein Abstand zwischen Obermesser und Untermesser in horizontaler Richtung, der auch als Schneidspalt bezeichnet wird, kann dabei beispielsweise durch Verschieben der Tischplatte in horizontaler Richtung eingestellt werden.

Üblicherweise dient zur Erzeugung der Schneidbewegung ein rotatorischer Antrieb, der unterhalb der Tischplatte angeordnet ist und über Übersetzungsgetriebe sowie zwei Antriebswellen endseitig mit exzentrisch gelagerten Kurbelwangen verbunden ist. Über diese Kurbelwangen, die dafür an ihren beiden Enden jeweils eine Lageröffnung aufweisen, wird aus der rotatorischen Antriebsbewegung die vertikale Bewegung des Messerbalkens gegenüber dem Hauptrahmen erzeugt.

Derartige Scheren arbeiten an sich zufriedenstellend. Es hat sich aber herausgestellt, dass durch eine Materialelastizität der Kurbelwangen die Lagerungen relativ stark belastet werden, was zu einem erhöhten Verschleiß führt. Ferner führt dies, insbesondere bei festeren Bändern dazu, dass für die Erzeugung eines genauen Schnittverlaufs die Kurbelwangen relativ stabil, also mit einem hohen Materialeinsatz, gefertigt werden müssen, was diese relativ schwer und kostenintensiv macht.

Aus DE 40 24 615 A1 ist nun eine Schneideinrichtung bekannt, die zum Schneiden von bandförmigem Material, insbesondere von Fotopapier und Filmen, ausgelegt ist. Diese Schneideinrichtung weist ein vertikal bewegbares Obermesser und ein stationär befestigtes Untermesser auf, wobei eine Bewegung des Obermessers über eine Antriebswelle eingebracht wird, die exzentrisch in einem Lagergehäuse gelagert ist. Das Lagergehäuse ist mittig auf einem Messerbalken des Obermessers angeordnet. Dabei erstreckt sich die Antriebswelle senkrecht zum Messerbalken und dem Obermesser. Durch diese Ausgestaltung ist es möglich, das Obermesser nicht nur auf und ab zu bewegen, sondern auch ein allmähliches Schließen des Messerspalts zu erreichen. Diese leichte Schwenkbewegung soll für die zu schneidenden Materialien, also für Fotopapier und Filme, besonders vorteilhaft sein.

Es ist also eine Aufgabe der Erfindung, eine Schere anzugeben, die die Nachteile des Standes der Technik beseitigt. Insbesondere soll die Schere mit geringem Aufwand herstellbar sein und eine hohe Steifigkeit aufweisen. Dabei soll eine hohe Lebensdauer erreicht werden.

Erfindungsgemäß wird diese Aufgabe dadurch gelöst, dass die Antriebswelle parallel zur Längsrichtung des Messerbalkens und des Obermessers verläuft und exzentrisch in mindestens zwei voneinander beabstandeten Lagergehäusen gelagert ist, die über eine Linearführung horizontal beweglich und vertikal unbeweglich am Messerbalken gelagert sind.

Die Antriebswelle verläuft dabei oberhalb des Messerbalkens und nicht wie bisher unterhalb der Tischplatte. Dadurch ist es möglich, anstelle von Kurbelwangen relativ steife Lagergehäuse vorzusehen, die sehr viel kleiner ausgebildet sein können als die bisher verwendeten Kurbelwangen. Lagerbelastungen werden dadurch gering gehalten. Das Lagergehäuse kann im Wesentlichen quaderförmig ausgebildet und damit relativ steif sein und beispielsweise eine zentrische Lageröffnung umfassen, in der die Antriebswelle exzentrisch aufgenommen wird. Durch die exzentrische Lagerung der Antriebswelle wird die Rotationsbewegung der Antriebswelle in eine horizontale und vertikale Bewegung des Lagergehäuses umgesetzt. Der Antrieb selbst kann direkt oder über ein Getriebe mit der Antriebswelle verbunden sein und beispielsweise am Hauptrahmen befestigt werden. Das Lagergehäuse ist rotationsfest und vertikal unbeweglich am Messerbalken gelagert, wohingegen eine horizontale Bewegung des Lagergehäuses gegenüber dem Messerbalken über eine Linearführung ermöglicht wird. Dementsprechend wird die Rotationsbewegung der Antriebswelle in eine vertikale, lineare Bewegung des Messerbalkens mit dem Obermesser umgesetzt. Der Messerbalken ist dafür über vertikale Linearführungen am Hauptrahmen linear beweglich gelagert. Die Messeröffnung, also der Abstand zwischen Obermesser und Untermesser in vertikaler Richtung, ist in einem oberen Totpunkt der exzentrischen Lagerung maximal. Ein unterer Totpunkt ist dann so gewählt, dass mit Erreichen des unteren Totpunktes das Obermesser mit seiner Schneidkante vollständig am Untermesser vorbeigeführt worden ist und somit der Schnitt ausgeführt wurde.

Dabei ist besonders bevorzugt, dass die Antriebswelle mit einer Exzenterscheibe drehfest verbunden ist, die im Lagergehäuse drehbar gelagert ist. Dies stellt eine relativ einfache Möglichkeit dar, die Antriebswelle exzentrisch im Lagergehäuse zu lagern. Die Exzenterscheibe kann dabei die Form einer Lagerbuchse aufweisen, also über eine relativ große axiale Länge an der Antriebswelle anliegen und damit eine sichere Kraftübertragung gewährleisten. Zur drehfesten Verbindung kann die Exzenterscheibe dabei formschlüssig, kraftschlüssig beziehungsweise reibschlüssig oder stoffschlüssig mit der Antriebswelle verbunden sein. Beispielsweise ist dafür ein Spannsatz, eine Passfeder oder eine Spleißverbindung vorgesehen. Es ist auch denkbar, die Antriebswelle im Bereich der Exzenterscheibe mit einem polygonalen Außenquerschnitt zu versehen und eine entsprechende Öffnung in der Exzenterscheibe auszubilden, sodass eine formschlüssige Verbindung erhalten wird, über die auch größere Drehmomente problemlos übertragbar sind.

Da die Antriebswelle in Längsrichtung des Messerbalkens und des Obermessers verläuft,kann der Antrieb problemlos seitlich neben dem Messerbalken am Hauptrahmen befestigt werden.

Die Antriebswelle ist in mindestens zwei voneinander beabstandeten Lagergehäusen gelagert, die insbesondere jeweils an einem Randbereich des Messerbalkens angeordnet sind. Eine Krafteinleitung kann dabei an den Rändern des Messerbalkens erfolgen, also im Bereich der Führungen des Messerbalkens am Hauptrahmen. Dabei erfolgt eine symmetrische Krafteinleitung mit einer relativ geringen Durchbiegung des Messerbalkens beziehungsweise des Obermessers. Insgesamt lässt sich dadurch ein genauer Schnitt erzeugen.

Eine besonders einfache Ausgestaltung der Linearführung ergibt sich dadurch, dass die Linearführung mindestens einen mit dem Lagergehäuse oder dem Messerbalken verbundenen Führungswagen und eine Führungsschiene aufweist, die auf einer Oberseite des Messerbalkens oder an einer Unterseite des Lagergehäuses angeordnet ist. Eine Kraftübertragung über die Linearführung muss im Wesentlichen in einer vertikal nach unten gerichteten Richtung erfolgen, wobei in dieser Richtung Führungswagen und Führungsschiene formschlüsssig an der Oberseite des Messerbalkens anliegen. In vertikaler Richtung ist also insbesondere nach unten, also zum Schließen der Messeröffnung, eine hohe Kraftübertragung möglich. Damit ergibt sich auch eine relativ steife Verbindung. Gegebenenfalls können auch jeder Führungsschiene mehrere Führungswagen zugeordnet sein, oder mehrere Führungswagen mehreren Führungsschienen geführt sein.

Zum Ausgleichen von Ungeradheiten des Obermessers und/oder zum Einstellen einer Bombierung ist es vorteilhaft, wenn der Messerbalken eine Quereinstelleinrichtung insbesondere mit Druckschrauben aufweist, die in Längsrichtung nebeneinander angeordnet sind und in Querrichtung mit dem Obermesser zusammen wirken. Damit ist es möglich, Ungeradheiten beispielsweise in der Größenordnung von ca. 0,002 bis 0,02 mm auszugleichen. Zur Erstellung eines geraden Schnittes ist dabei häufig die Einstellung einer Bombierung, also einer konvexen bzw. konkaven Auslenkung des Obermessers, vorteilhaft, wobei eine Auslenkung von beispielsweise bis zu +/- 0,03 mm in der Mitte des Obermessers eingestellt wird. Die genaue Auslenkung ist dabei vom Material des zu schneidenden Bandes abhängig. Durch eine entsprechende Anzahl neben einander angeordneter Druckschrauben ist dabei eine relativ feine Auflösung möglich.

Für ein sauberes Schnittergebnis ist es dabei vorteilhaft, das Obermesser leicht winklig zur Vertikalen anzuordnen. Vorzugsweise nimmt die Messeröffnung dabei von der Anschnittseite in Richtung Materialabtransportseite zu. Dadurch wird eine Verquetschung des Bandes während des Schneidvorgangs gering gehalten und der Materialstreifen wird am Ende des Schneidvorgangs nur geringfügig niedergedrückt.

In einer bevorzugten Weiterbildung weist der Messerbalken vorderseitig einen vertikal bewegbaren Niederhalter auf. Vorderseitig bedeutet dabei, dass der Niederhalter in Zuführrichtung des Bandes vor dem Messerbalken beziehungsweise vor der Messeröffnung angeordnet ist. Mit Hilfe des Niederhalters kann das Band während des Schneidvorgangs gesichert werden. Der Niederhalter verhindert dabei Bewegungen des Bandes, die zu einem fehlerhaften Schnitt oder einem Verziehen des Bandes führen könnten. Dabei wird der Niederhalter vor dem Schnitt vertikal nach unten bewegt, um das Band zu halten. Nach dem Schnitt erfolgt eine Bewegung vertikal nach oben. Das Band wird damit wieder frei gegeben.

Bevorzugterweise wirken mit dem Niederhalter mindestens zwei mit dem Messerbalken verbundene, vertikal wirkende Zylinder zusammen, wobei insbesondere Zylinderstößel der Zylinder in Halterungen geführt sind, mit denen die Zylinder am Messerbalken befestigt sind. Mit Hilfe von vertikal wirkenden Zylindern ist eine vertikale Bewegung des Niederhaltes relativ einfach erzeugbar, wobei auch eine ausreichend hohe Anpresskraft übertragbar ist, um das Band sicher halten zu können. Durch Verwendung der Halterungen, mit denen die Zylinder am Messerbalken befestigt sind, zur Führung der Zylinderstößel, ergibt sich dabei eine relativ steife Ausgestaltung, sodass ein gleichmäßiger Anpressdruck gewährleistet werden kann. Auch können die Zylinderstößel dadurch mit geringerem Durchmesser gefertigt werden, da aufgrund der zusätzlichen Führung eine Biegebelastung verringert wird.

Vorzugsweise ist die Tischplatte in einer horizontalen Richtung senkrecht zur Messeröffnung bzw. zum Schneidspalt schwimmend am Hauptrahmen gelagert, wobei eine Relativlage zwischen Tischplatte und Hauptrahmen über eine Einstellvorrichtung einstellbar ist. Durch eine entsprechende Positionierung der Tischplatte in Bezug zum Messerbalken wird der Schneidspalt, also der horizontale Abstand zwischen Obermesser und Untermesser, eingestellt. Häufig wird dabei eine Überlappung zwischen Obermesser und Untermesser eingestellt, die beispielsweise zwischen 0,005 bis 0,02 mm beträgt. Es ist also eine sehr genaue Einstellung möglich. Zum Festlegen der Position der Tischplatte am Hauptrahmen kann eine einfache Klemmvorrichtung vorgesehen werden, die beispielsweise in einem Langloch geführte Schrauben, die mit einem oder mehreren Klemmelementen zusammenwirken, aufweist. Dabei ist es dabei auch möglich, eine Parallelität des Untermessers bezüglich des Obermessers einzustellen. Beispielsweise durch einen Austausch des oder der Messer hervorgerufene Rüstzeiten können so klein gehalten werden.

Dazu kann die Einstellvorrichtung zumindest ein senkrecht zur Messeröffnung bzw. zum Schneidspalt wirkendes Federelement, insbesondere eine Tellerfeder bzw. ein Tellerfederpaket, und ein in entgegengesetzter Richtung wirkendes Abdrückelement, insbesondere eine Abdrückschraube, aufweisen. Die Kraft der Tellerfedern beziehungsweise des Federelementes kann dabei eine Vergrößerung des Schneidspaltes bewirken, während über das Abdrückelement beziehungsweise die Abdrückschraube der Schneidspalt verringert wird. Mit zwei insbesondere seitlich an der Tischplatte angeordneten Federelementen beziehungsweise Abdrückelementen lässt sich im ausreichenden Maße eine Winkellage der Mischplatte gegenüber dem Messerbalken einstellen und damit eine Parallelität zwischen dem Obermesser und dem Untermesser justieren.

Zur Vereinfachung einer Justage kann die Einstellvorrichtung eine Messeinrichtung aufweisen. Über diese Messeinrichtung kann insbesondere eine Feinjustage vereinfacht werden.

In einer bevorzugten Ausgestaltung ist an einer dem Messerspalt benachbarten Kante der Tischplatte eine parallel zum Untermesser verlaufende, vertikal bewegbare Hebeleiste angeordnet, die insbesondere über eine Vielzahl von Druckzylindern vertikal bewegbar ist. Insbesondere bei einer relativ elastischen Ausgestaltung der Hebeleiste, die beispielsweise aus einer geringen Materialstärke resultiert, wird durch eine Vielzahl von Druckzylindern eine ungewünschte Durchbiegung der Hebeleiste verhindert. Die Hebeleiste wirkt mit dem Niederhalter zusammen, wobei der Niederhalter das zugeführte Band gegen die Hebeleiste drückt, sodass das Band zwischen diesen beiden Elementen klemmend gehalten werden kann. Nach erfolgtem Schneidevorgang kann die Hebeleiste gegenüber der Tischplatte angehoben werden, beispielsweise über eine Vielzahl nebeneinander angeordneter Druckzylinder, sodass das freie Ende des Bandes nach dem Schnitt durch eine Rückziehvorrichtung relativ einfach ergriffen werden kann, um unter dem nach oben bewegten Obermesser hindurchgezogen zu werden. Durch die vertikal bewegbare Hebeleiste, die insbesondere in die Tischplatte integriert ist, erfolgt also nach dem Schneidvorgang ein Anheben des Bandes zur besseren Übergabe an ein nachgeordnetes Anlagenelement. Für diese Übergabe ist dabei eine geringe Materialstärke der Hebeleiste vorteilhaft.

In einer bevorzugten Ausführungsform weist der Messerbalken eine Abstreifvorrichtung auf, die ein parallel zur Messeröffnung bzw. zum Schneidspalt verlaufendes, gespanntes Bandelement umfasst, das an seinen Enden jeweils in einer Klemmvorrichtung befestigt ist, die mit dem Messerbalken verbunden ist. Mit Hilfe dieser Abstreifvorrichtung kann nach Beendigung des Schneidevorgangs eine vertikal nach unten gerichtete Abstreifkraft erzeugt werden, um das Band vom Obermesser zu lösen. Mit Hilfe der Klemmvorrichtung ist es dabei relativ einfach möglich, das Bandelement ausreichend zu spannen. Zum Lösen des Bandes ist häufig bereits die Schwingbewegung des Bandelementes im Umkehrpunkt der Bewegung des Messerbalkens ausreichend, um das Band vom Obermesser zu lösen. Zusätzlich kann aber vorgesehen sein, die Klemmvorrichtung vertikal bewegbar am Messerbalken zu befestigen, wobei insbesondere ein Druckzylinder zwischen der Klemmvorrichtung und dem Messerbalken angeordnet ist. Dadurch kann aktiv eine Relativbewegung zwischen dem Obermesser und der Abstreifvorrichtung beziehungsweise dem gespannten Bandelement erzeugt werden. Auch wenn das Band aus einem stark haftenden Material besteht, kann es so sicher vom Obermesser gelöst werden.

Die Erfindung wird im Folgenden anhand eines bevorzugten Ausführungsbeispiels in Verbindung mit den Zeichnungen näher beschrieben. Hierin zeigen in schematischer Ansicht:
- Figur 1: eine Vorderansicht einer Schere,
- Figur 2: eine Schnittansicht der Schere,
- Figur 3: einen Messerbalken einer ersten Ausführungsform,
- Figur 4: einen Messerbalken einer zweiten Ausführungsform,
- Figur 5: eine Tischplatte in Aufsicht,
- Figur 6: die Tischplatte in Schnittansicht,
- Figur 7: einen Ausschnitt des Messerbalkens mit einem Obermesser,
- Figur 8: einen Ausschnitt der Tischplatte mit einer Einstellvorrichtung,
- Figur 9 bis 14: Schnittansichten der Schere während des Schnittvorgangs,
- Figuren 15a bis 18b: Unterschiedliche Verbindungen einer Exzenterscheibe mit einer Antriebswelle der Schere,
- Figur 19: ein beispielhaftes Gesamtanlagenlayout und
- Figur 20: ein Gesamtanlagenlayout entsprechend Fig. 19 mit zusätzlicher Längsschneideeinrichtung

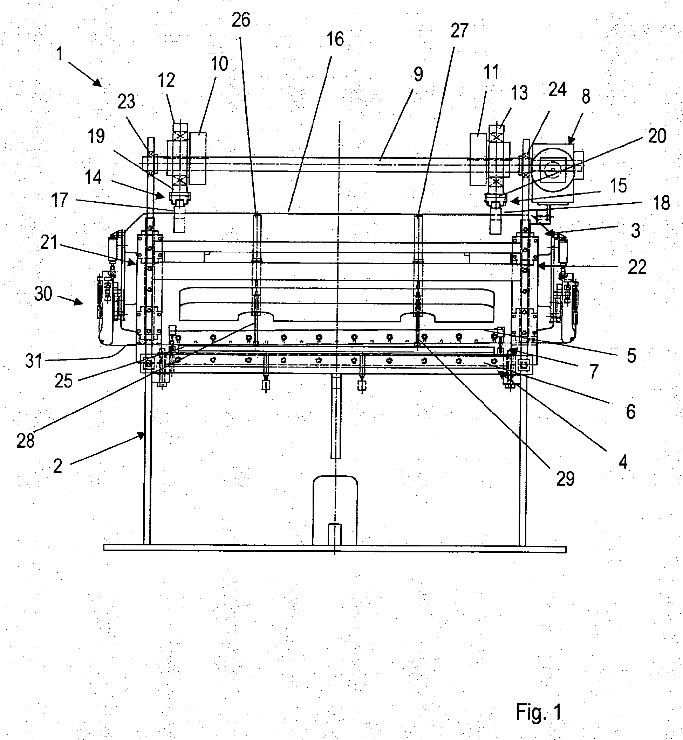

Figur 1 zeigt eine Schere 1 zum Schneiden eines dünnen, klebrigen Bandes, die einen vertikal an einem Hauptrahmen 2 geführten Messerbalken 3 und eine in Vertikalrichtung gegenüber dem Hauptrahmen 2 unbeweglich angeordnete Tischplatte 4 aufweist. Im unteren Bereich des Messerbalkens ist ein Obermesser 5 befestigt, das mit einem Untermesser 6 zusammenwirkt, das an der Tischplatte 4 angeordnet ist. Zwischen dem Obermesser 5 und dem Untermesser 6 ist in vertikaler Richtung eine Messeröffnung 7 und in horizontaler Richtung ein Schneidspalt 69 ausgebildet.

Zum Schneiden eines über die Tischplatte 4 bei der Darstellung nach Figur 1 in die Zeichenebene hineingeführten Bandes führt der Messerbalken 3 mit dem Obermesser 5 eine vertikal nach unten gerichtete Bewegung aus, sodass die Messeröffnung 7 geschlossen und das Band zwischen Obermesser 5 und Untermesser 6 geschnitten wird. Zur Bewegung des Messerbalkens 3 ist ein Antrieb 8 vorgesehen, der am Hauptrahmen 2 befestigt ist. Der Antrieb 8 treibt eine Antriebswelle 9 an, die über Exzenterscheiben 10, 11 exzentrisch in Lagergehäusen 12, 13 gelagert ist. Die Exzenterscheiben 10, 11 sind dabei buchsenförmig ausgebildet und werden von der Antriebswelle 9 durchdrungen.

Die Lagergehäuse 12, 13 sind über Linearführungen 14, 15 an einer Oberseite 16 des Messerbalkens 3 vertikal festgelegt, können aber zum Ausgleich des Drehversatzes in horizontaler Richtung gegenüber dem Messerbalken 3 frei bewegt werden. Dafür weisen die Linearführungen 14, 15 bei diesem Ausführungsbeispiel an der Oberseite 16 des Messerbalkens 3 befestigte Führungsschienen 17, 18 und jeweils am Lagergehäuse 12, 13 befestigte Führungswagen 19, 20 auf. Eine umgekehrte Anordnung, bei der die Führungswagen an der Oberseite des Messerbalkens und die Führungsschienen am jeweiligen Lagergehäuse befestigt sind, ist in gleicher Weise möglich.

Die Rotationsbewegung der Antriebswelle 9 führt aufgrund der exzentrischen Lagerung in den Lagergehäusen 12, 13 zu einer vertikalen und horizontalen Bewegung dieser Lagergehäuse, die über die Linearführungen 14,15 zu einer linearen, vertikalen Bewegung des Messerbalkens umgewandelt wird. Dafür ist der Messerbalken 3 mit vertikalen Linearführungen 21, 22 am Hauptrahmen 2 vertikal beweglich gelagert.

Die Lagergehäuse 12, 13 können bei der Anordnung des Antriebs 8 mit der Antriebswelle 9 oberhalb des Messerbalkens 3 sehr steif ausgebildet sein, sodass ein Aufbiegen während des Schneidvorganges kaum zu befürchten ist. Anstelle von zwei Lagergehäusen 12, 13 können gegebenenfalls auch mehrere Lagergehäuse vorgesehen werden, um eine Durchbiegung der Antriebswelle zu verringern. Da die Lagergehäuse 12, 13 aber relativ nah an Lagerstellen 23, 24, an denen die Antriebswelle 9 radial beweglich im Hauptrahmen 2 gelagert ist, positioniert sind, wird die Biegebelastung der Antriebswelle 9 ohnehin gering gehalten. Insgesamt ergibt sich somit eine relativ steife Ausbildung.

An einer Vorderseite des Messerbalkens 3, die in Zuführrichtung des Bandes vor der Messeröffnung 7 und damit auf einer Zuführseite der Schere 1 liegt, ist ein Niederhalter 25 vorgesehen, der vertikal beweglich am Messerbalken 3 gelagert ist. Über den Niederhalter 25 kann eine vertikal nach unten gerichtete Kraft auf das Band ausgeübt werden, um das Band während des Schneidvorgangs klemmend zu fixieren. Zur Bewegung des Niederhalters 25 sind zwei Zylinder 26, 27 am Messerbalken 3 angeordnet, deren Zylinderstößel 28, 29 mit dem Niederhalter 25 verbunden sind. Die Zylinder 26, 27 wirken in Vertikalrichtung und dienen zum Ausüben einer entsprechenden Andruckkraft auf den Niederhalter 25.

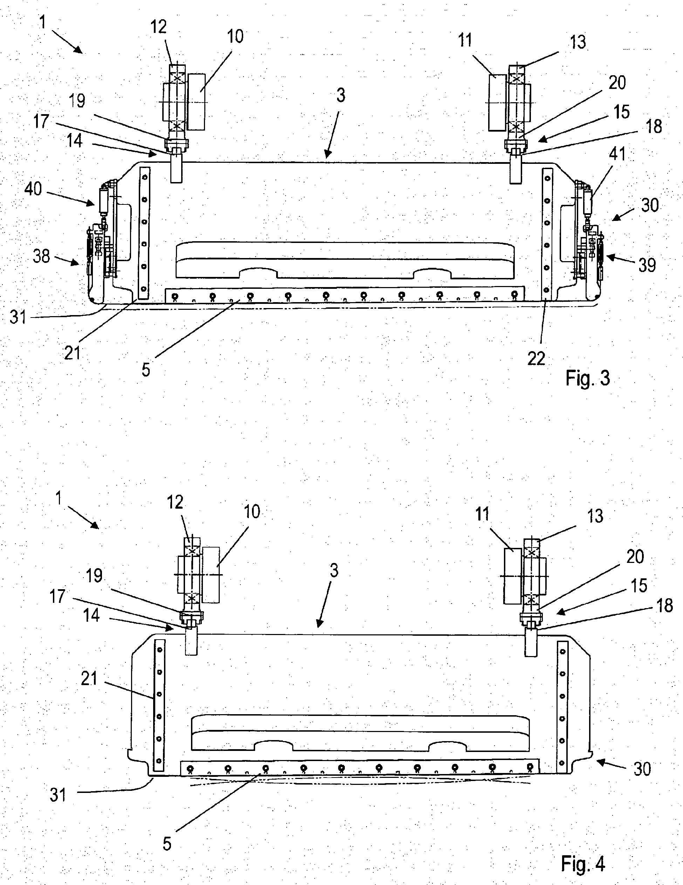

Am Messerbalken 3 ist ferner eine Abstreifvorrichtung 30 vorgesehen, die ein gespanntes Bandelement 31 aufweist, das parallel zum Schneidspalt 69 beziehungsweise zum Obermesser 5 verläuft. Die Abstreifvorrichtung 30 dient dazu, nach Ende des Schneidvorgangs ein Lösen des Bandes vom Obermessers 5 zu erleichtern. Die Abstreifvorrichtung 30 wird nachfolgend in Verbindung mit den Figuren 3 und 4 näher beschrieben.

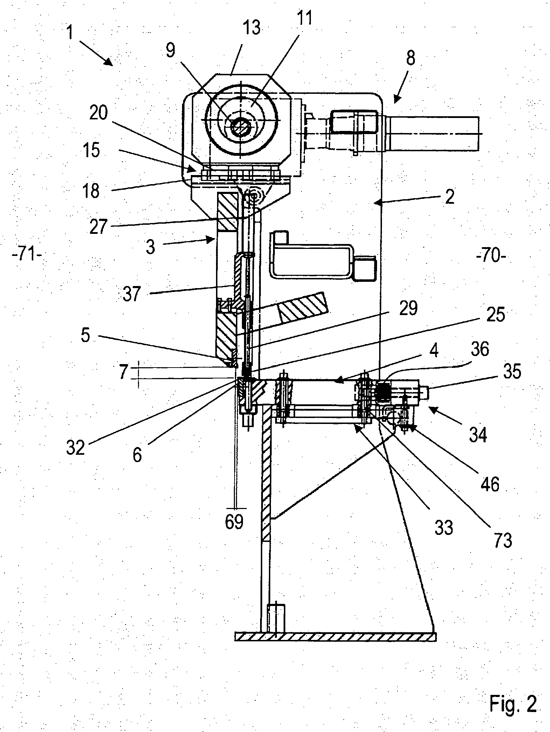

In Figur 2 ist die Schere 1 nach Figur 1 in geschnittener Seitenansicht dargestellt. Das Obermesser mit dem Messerwagen 3 befindet sich in seiner vertikal oberen Position, die Messeröffnung 7 ist also vollständig offen. Der Niederhalter 25 befindet sich dagegen in seiner vertikal unteren Position und drückt gegen eine Hebeleiste 32, die vertikal bewegbar in die Tischplatte 4 integriert ist. Das von einer Zuführseite 70 aus zugeführte Band kann somit zwischen dem Niederhalter 25 und der Hebeleiste 32 geklemmt werden. Die der Zuführseite 70 abgewandte Seite der Schere kann als Abtransportseite 71 bezeichnet werden, von der die abgeschnittenen Streifen des Bandes weiter transportiert und/oder verarbeitet werden.

Zur Einstellung eines Versatzes zwischen dem Obermesser 5 und dem Untermesser 6 ist die Tischplatte 4 gegenüber dem Hauptrahmen 2 in horizontaler Richtung linear verschiebbar angeordnet. Zum Festlegen der Tischplatte 4 gegenüber dem Hauptrahmen 2 dienen Klemmleisten 33, welche mit Hilfe von Schrauben 72 angezogen werden können. Die Tischplatte 4 liegt dabei am Hauptrahmen 2 auf. Um eine ausreichende Beweglichkeit der Tischplatte 4 zu erlauben, sind die Schrauben in Langlöchern geführt. Die Position der Tischplatte 4 ist nach Lösen der Schrauben 72 bzw. der Klemmleiste 33 über eine Einstelleinrichtung 34 einstellbar. Die Einstellvorrichtung 34 weist dafür ein Abdrückelement 35, das als Abdrückfeder ausgebildet ist, und ein Federelement 36, das als Tellerfeder ausgebildet ist, auf, wobei das Federelement 36 und das Abdrückelement 35 in gegensinniger horizontaler Richtung wirken. Das Abdrückelement 35 bewirkt dabei eine Bewegung der Tischplatte in Richtung Messerbalken, also eine Verringerung einer Schneidspaltbreite, während das Federelement 36 in entgegengesetzter Richtung wirkt.

Die exzentrische Lagerung der Antriebswelle 9 über die Exzenterscheibe 11 im Lagergehäuse 13 ist in Figur 2 gut erkennbar. Das im Wesentlichen quaderförmige Lagergehäuse 13 ist dabei in Horizontalrichtung über die Linearführung 15 an der Oberseite 16 des Messerbalkens 3 gelagert.

Die Exzenterscheibe 11 befindet sich in dem in Figur 2 dargestellten Zustand in ihrem oberen Totpunkt, bei dem die Messeröffnung 7 vollständig geöffnet ist. Durch Drehung der drehfest mit der Exzenterscheibe 11 verbundenen Antriebswelle 9 bewegt sich das Lagergehäuse 13 vertikal nach unten und in horizontaler Richtung, wobei aufgrund der Linearführung 15 nur die vertikale Bewegung auf den Messerbalken 3 übertragen wird, der dementsprechend vertikal nach unten bewegt wird, sodass die Messeröffnung 7 zwischen dem Obermesser 5 und dem Untermesser 6 geschlossen wird. Bei weiterer Drehung der Antriebswelle 9 durch den Antrieb erfolgt dementsprechend wieder ein Öffnen der Messeröffnung 7.

Der Zylinderstößel 29 des Zylinders 27, der dazu dient, den Niederhalter 25 vertikal zu bewegen, ist in einer Halterung 37 geführt, die darüber hinaus den Zylinder 27 am Messerbalken 3 hält. Durch diese Führungsfunktion der Halterung 37 kann der Zylinderstößel 29 relativ lang ausgebildet sein, ohne dass eine Durchbiegung des Zylinderstößels 29 zu befürchten ist.

In Figur 3 ist der Messerbalken 3 mit den Lagergehäusen 12, 13, in denen die Exzenterscheiben 10, 11 angeordnet sind, dargestellt. Das Obermesser 5 befindet sich an einer unteren Kante des Messerbalkens 3. Das Bandelement 31 der Abstreifvorrichtung 30 verläuft parallel zur Unterkante des Obermessers 5 und ist mit seinen Enden jeweils in einer Klemmeinrichtung 38, 39 unter Spannung geklemmt. Zur aktiven Erzeugung einer Relativbewegung zwischen dem Bandelement 31, das beispielsweise als Seil ausgebildet ist, und dem Obermesser 5 sind die Klemmvorrichtungen 38, 39 linear verschiebbar am Messerbalken 3 gelagert und über Druckzylinder 40, 41 bewegbar. Nach Abschluss des Schneidvorgangs können somit die Klemmvorrichtungen 38, 39 mit dem Bandelement 31 vertikal gegenüber dem Obermesser 5 und dem Messerbalken 3 nach unten bewegt werden, um ein Ende des geschnittenen Bandes vom Obermesser 5 zu lösen.

In Figur 4 ist eine vereinfachte Ausgestaltung der Abstreifvorrichtung 30 gezeigt. Das Bandelement 31 der Abstreifvorrichtung 30 ist mit seinen Enden direkt am Messerbalken 3 geklemmt, also nicht aktiv gegenüber dem Messerbalken 3 bewegbar. Ein Schwingen des Bandelementes 31, das durch den Schneidvorgang hervorgerufen wird, wobei insbesondere ein Überschwingen nach Abschluss des Schneidvorgangs maßgeblich ist, führt dazu, dass das Ende des geschnittenen Bandes vom Obermesser 5 gelöst wird. Das Überschwingen des Bandelementes 31 ist schematisch durch strichpunktierte Linien dargestellt.

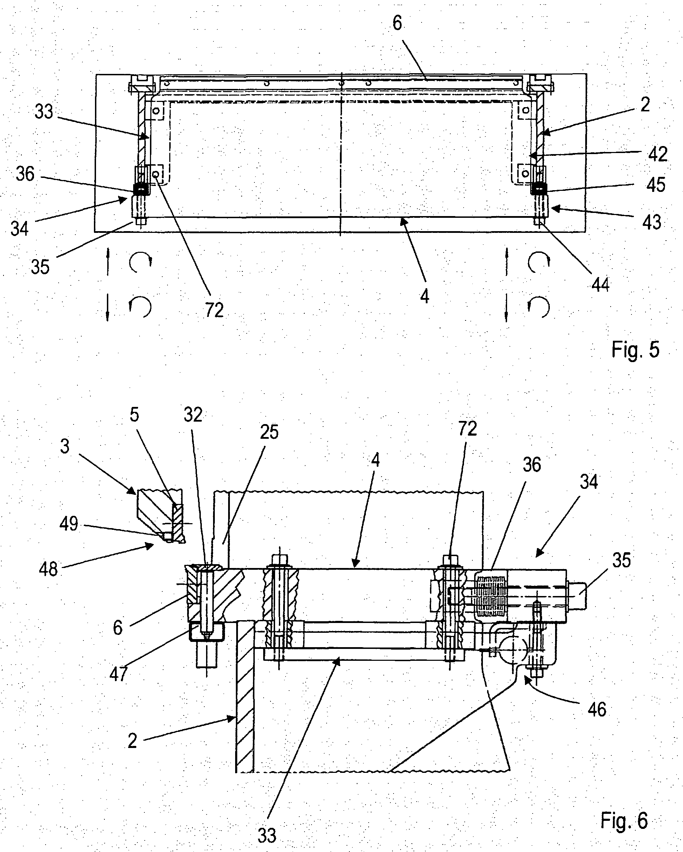

In Figur 5 ist eine horizontale Schnittansicht der Tischplatte 4 gezeigt. Die Tischplatte 4 ist beidseitig mit Feststelleinrichtungen, die jeweils eine Klemmleiste 33 aufweisen, in Horizontalrichtung beweglich am Hauptrahmen 2 gelagert. Dementsprechend ist eine zweite Einstelleinrichtung 43 mit einem zweiten Abdrückelement 44 und einem zweiten Federelement 45 vorgesehen. Das zweite Abdrückelement 44 ist als Abdrückschraube und das zweite Federelement 45 als Tellerfederpaket ausgebildet.

Durch Verstellen der Abdrückelemente 35, 44, also durch Hinein- oder Herausschrauben, lässt sich die Tischplatte 4 gegenüber dem Hauptrahmen 2 in horizontaler Richtung bewegen. Dies entspricht einer Bewegung bei der Darstellung gemäß Figur 5 nach oben beziehungsweise unten. Durch eine nicht gleichmäßige Verstellung der Einstelleinrichtungen 34, 43 lässt sich auch eine begrenzte Winkelverstellung bewirken, wodurch eine Parallelität des Untermessers 6 zum Obermesser 5 eingestellt werden kann. Insgesamt lässt sich der Schneidspalt 69 durch die Einstellvorrichtungen 34, 43 in Verbindung mit der horizontal schwimmenden Lagerung der Tischplatte 4, die das Untermesser 6 trägt, sehr genau einstellen.

Figur 6 zeigt eine seitliche Schnittansicht der Tischplatte 4. Dabei ist die Einstellvorrichtung 34 mit einer Messeinrichtung 46 versehen, über das die horizontale Position der Tischplatte 4 gegenüber dem Hauptrahmen 2 und damit gegenüber dem Messerbalken 3 ablesbar ist.

Die Hebeleiste 32, die parallel zum Untermesser 6 verläuft, ist über Druckzylinder 47 vertikal bewegbar in der Tischplatte 4 gelagert. Über die Hebeleiste 32 kann somit ein Ende des Bandes von einer Oberseite der Tischplatte 4 beziehungsweise des Untermessers 6 nach Abschluss des Schneidvorgangs abgehoben werden.

Zum Ausgleichen von Ungeradheiten und zum Einstellen einer Bombierung weist der Messerbalken eine Quereinstelleinrichtung 48 mit Druckschrauben 49 auf, die mit seitlich auf einen unteren, streifenförmigen Bereich des Obermessers 5 wirken. Durch eine Vielzahl von Druckschrauben 49, die insbesondere mit gleichmäßigem Abstand zueinander entlang des Obermessers 5 im Messerbalken 3 angeordnet sind, lassen sich auch geringe Ungeradheiten von beispielsweise 0,002 bis 0,02 mm ausgleichen.

In Zusammenwirkung mit der horizontal beweglichen Lagerung der Tischplatte 4 gegenüber dem Hauptrahmen 2 beziehungsweise den Einstelleinrichtungen 34, 43 lässt sich dabei eine genaue Einstellung einer Überdeckung zwischen Obermesser 5 und Untermesser 6 erreichen, die für die Erzielung eines sauberen Schnittes vorteilhaft ist. Die Überdeckung liegt beispielsweise in der Größenordnung von 0,01 mm an den seitlichen Enden des Obermessers 5 und im Bereich von ca. +/- 0,03 mm in der Mitte des Obermessers 5, wobei die positive oder negative Bombierung mit Hilfe der Quereinstelleinrichtung 48 erzeugt wird. Insgesamt lassen sich so sehr saubere, reproduzierbare Schnittergebnisse auch bei unterschiedlichen Bandmaterialien erreichen.

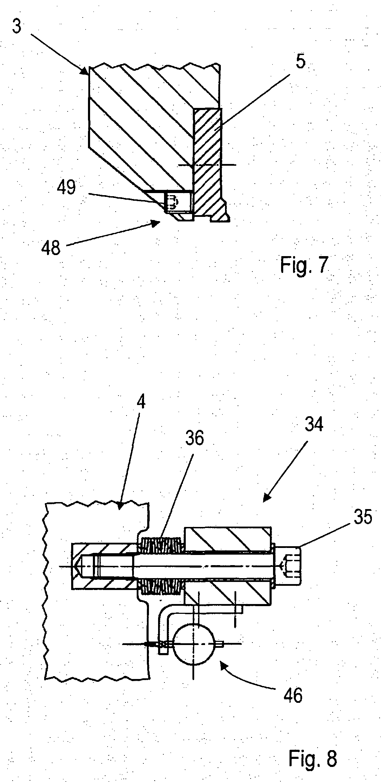

Figur 7 zeigt einen Ausschnitt des Messerbalkens 3 mit Obermesser 5 und einer Druckschraube 49 der Quereinstelleinrichtung 48. In Längsrichtung des Obermessers 5, also in die Zeichenebene hinein, sind dabei mehrere Druckschrauben nebeneinander angeordnet, um eine variable Einstellung in dieser Längsrichtung zu erhalten.

Figur 8 zeigt einen Ausschnitt der Tischplatte 4 beziehungsweise der Einstelleinrichtung 34 mit der Messeinrichtung 46. Das Federelement 36 ist als Tellerfederpaket und das Abdrückelement 35 als Abdrückschraube ausgebildet, das in einem Gewinde der Tischplatte 4 teilweise aufgenommen ist. Durch Einschrauben der Abdrückschraube 35 verringert sich die Breite des Schneidspalts 69, während beim Ausschrauben durch Wirkung des Tellerfederpaketes 36 dessen Breite wieder zunimmt.

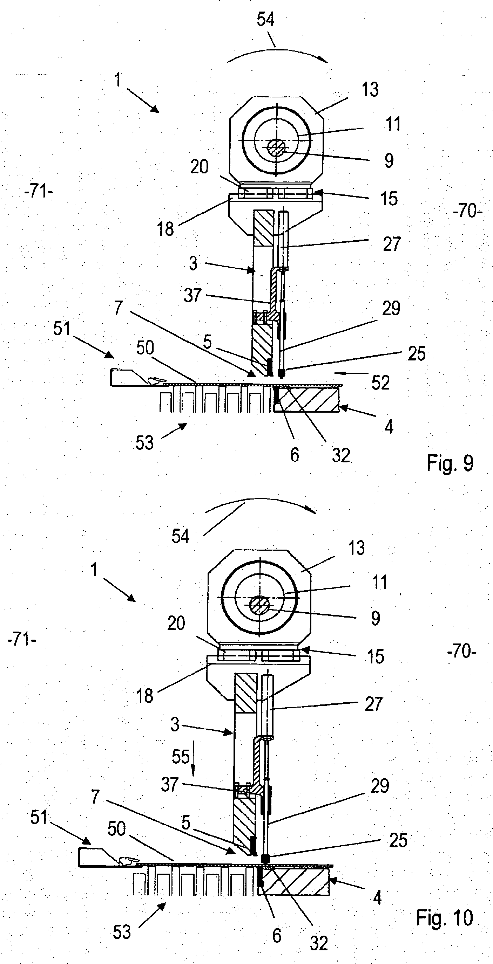

In den Figuren 9 bis 14 sind Momentaufnahmen des Schneidvorgangs dargestellt. In Figur 9 ist die Messeröffnung 7 vollständig geöffnet und das Band 50 wurde mit Hilfe einer Rückzieheinrichtung 51 in Richtung eines Pfeiles 52 durch die Messeröffnung 7 hindurchgezogen, sodass ein Streifen des Bandes 50 in gewünschter Breite in Zuführrichtung hinter dem der Messeröffnung 7 auf einem Hochhalter 53 liegt. Der Messerbalken 3 mit dem Obermesser 5 befindet sich in seiner obersten Position, sodass die Messeröffnung 7 vollständig geöffnet ist. Dementsprechend befindet sich die Exzenterscheibe 11 im Bereich eines oberen Totpunktes. Der Niederhalter 25 befindet sich ebenfalls in seiner obersten Position, um das Durchziehen des Bandes 50 durch die Messeröffnung 7 nicht zu behindern. Durch Rotation der Antriebswelle 9 in einer durch einen Pfeil 54 symbolisierten Drehrichtung wird der Messerbalken 3 mit dem Obermesser 5 nach unten bewegt, wobei ein horizontaler Drehversatz über die Linearführung 15 ausgeglichen wird. Kurz darauf oder zeitgleich wird das Band 50 mit Hilfe des Niederhalters 25, der dafür mit der Hebeleiste 32 zusammenwirkt, in Zuführrichtung unmittelbar vor der Messeröffnung 7 klemmend gehalten. Dies ist in Figur 10 dargestellt. Ein Pfeil 55 symbolisiert die vertikal nach unten gerichtete Bewegung des Messerbalkens 3 aufgrund der Rotationsbewegung der exzentrisch im Lagergehäuse 13 gelagerten Antriebswelle 9.

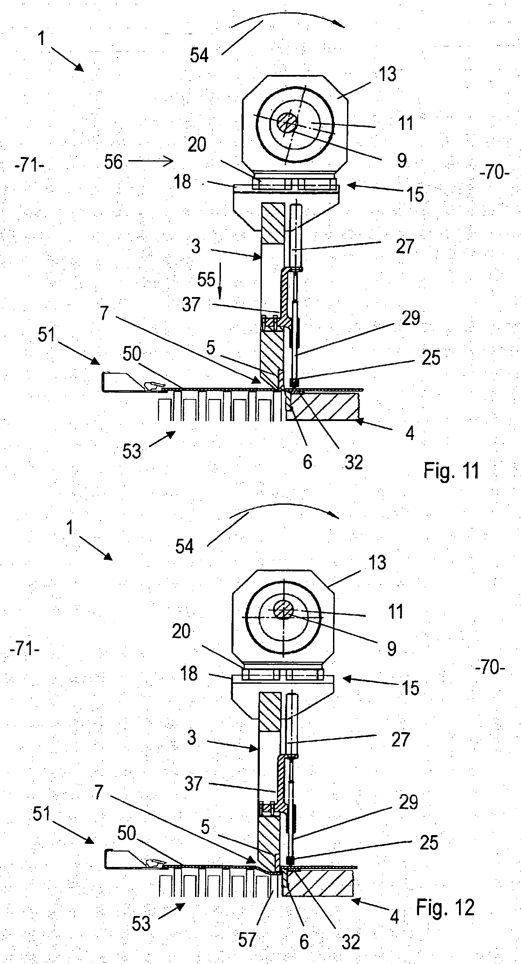

In Figur 11 ist die Schere 1 unmittelbar vor Schnittbeginn gezeigt. Die Exzenterscheibe 11 befindet sich kurz vor ihrem unteren Totpunkt und das Obermesser 5 liegt mit einer Schneidkante am Band 50 an. Durch die Drehung der Antriebswelle 9 ist das Lagergehäuse 13 gegenüber dem Messerbalken 3 horizontal in Richtung eines Pfeils 56 versetzt worden, wobei dieser Versatz durch die Linearführung 15 freigegeben ist. Der Messerbalken 3 wird so überwiegend frei von horizontalen Kräften gehalten. Im Wesentlichen wirkt nur die in vertikaler Richtung wirkende Schnittkraft auf den Messerbalken 3.

Bei der Darstellung gemäß Figur 12 hat die Exzenterscheibe 11 ihren unteren Totpunkt erreicht und das Obermesser 5 hat in Zusammenwirkung mit dem Untermesser 6 das Band 50 durchtrennt. Dabei wurde ein in Vertikalrichtung bewegbarer Gegenhalter 57 des Hochhalters 53 durch den Messerbalken 3 vertikal nach unten gedrückt. Der Gegenhalter 57 behindert den Schnittvorgang also nicht, obwohl er relativ eng zum Untermesser 6 beziehungsweise der Tischplatte 4 benachbart angeordnet ist. Das Band 50 hat dadurch keinen breiten Spalt zu überbrücken.

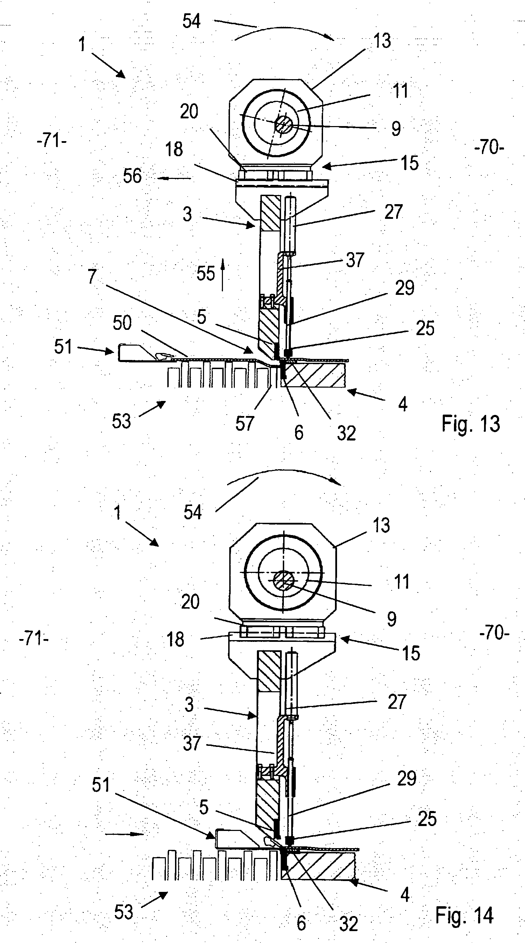

Durch weitere Rotation der Antriebswelle 9 nach Erzeugen des Schnitts in dem Band 50 wird der Messerbalken 3 mit dem Obermesser 5 vertikal angehoben (Figur 13). Dabei wird das Lagergehäuse 13 gegenüber dem Messerbalken 3 horizontal versetzt, bei der Darstellung gemäß Figur 13 nach links. Die Hebeleiste 32 wird über die Druckzylinder 47 vertikal nach oben gegenüber der Tischplatte 4 angehoben und hebt damit das abgeschnittene Ende des Bandes 50 an.

In Figur 14 hat die Exzenterscheibe 11 wieder ihren oberen Totpunkt erreicht. Über die Rückzieheinrichtung 51 wird das mit Hilfe der Hebeleiste 32 angehobene und daher leicht ergreifbare Ende des Bands 50 ergriffen, um es durch die Messeröffnung 7 von der Zuführseite 70 zur Abtransportseite 71 hindurch zu ziehen. Der vorher abgeschnittene Streifen des Bands 50 wurde in der Zwischenzeit über im Hochhalter 53 angeordnete Laufbänder 58 abtransportiert. Bevor die Rückzieheinrichtung 51 das Band 50 durch die Messeröffnung 7 hindurchziehen kann, wird noch der Niederhalter 25 mit Hilfe des Zylinders 27vertikal nach oben verfahren, um das Band 50 freizugeben. Dabei wird auch, nachdem das Ende des Bands durch die Rückzieheinrichtung 51 gegriffen wurde, die Hebeleiste 32 vertikal nach unten verfahren, um einen glatten Ablauf des Bands 50 zu gewährleisten. Der Schneidvorgang beginnt dann von vorne.

Durch die exzentrische Lagerung der Antriebswelle 9 über die Exzenterscheiben 10, 11 in den Lagergehäusen 12, 13 wird also die kontinuierliche Rotationsbewegung des Antriebs 8 über die Antriebswelle 9 in eine vertikale Auf- und Abbewegung des Messerbalkens 3 umgesetzt.

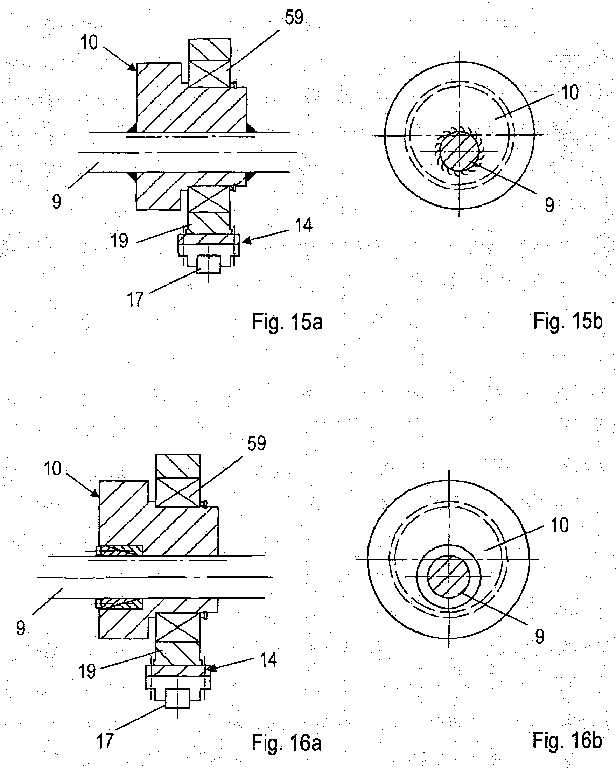

Die Figuren 15a bis 18b zeigen verschiedene Verbindungsmöglichkeiten, um die Antriebswelle 9 drehfest mit den Exzenterscheiben 10, 11 zu verbinden. Jeweils mit "a" bezeichnete Figuren zeigen dabei eine Schnittansicht und mit "b" bezeichnete Figuren eine Seitenansicht. Die Exzenterscheiben 10, 11 sind dabei über herkömmliche Radiallager 59 in den Lagergehäusen 12, 13 drehbar gelagert. Dabei erfolgt zusätzlich eine axiale Lagersicherung der Exzenterscheiben gegenüber dem Lagergehäuse.

Bei der Ausführungsform gemäß Fig. 15a und 15b ist die Antriebswelle 9 mit der Exzenterscheibe 10 verschweißt. Dies stellt eine stoffschlüssige, rotationsfeste Verbindung dar, über die hohe Drehmomente übertragbar sind.

Bei der Ausgestaltung gemäß Fig. 16a und 16b ist die Exzenterscheibe über eine Spannverbindung gegenüber der Antriebswelle 9 festgelegt. Dies stellt eine relativ einfache Verbindungsart dar, die eine spielfreie Verbindung ergibt und ausreichend hohe Drehmomente übertragen kann.

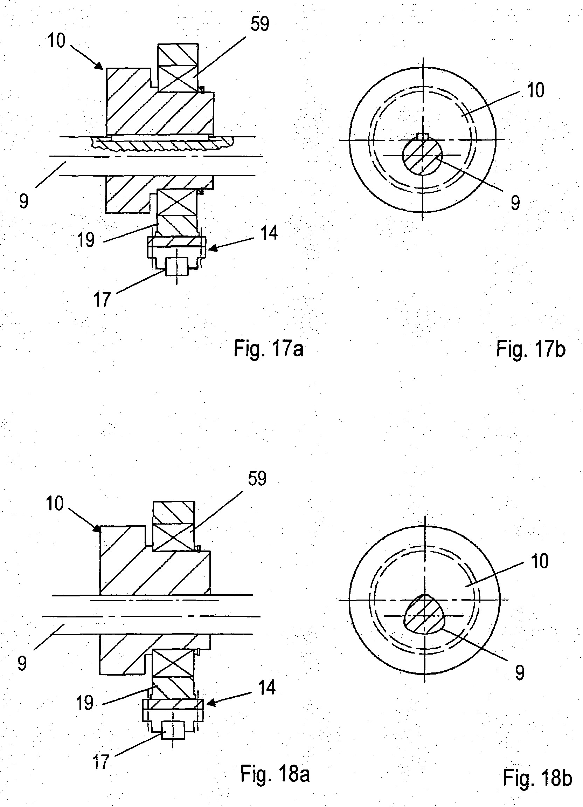

Die Ausgestaltung gemäß Fig. 17a und 17b zeigt eine formschlüssige Verbindung mit Hilfe einer in die Antriebswelle eingebrachten Nut, in der eine Passfeder aufgenommen ist. Drehmomente werden dabei über die Passfeder und die entsprechenden Anlageflächen vom Innendurchmesser der Exzenterscheibe beziehungsweise den Nutflanken übertragen.

Bei der Ausgestaltung gemäß Fig. 18a und 18b wird eine formschlüssige Verbindung zwischen der Exzenterscheibe und der Antriebswelle dadurch erreicht, dass die Antriebswelle zumindest im Verbindungsbereich einen unrunden Querschnitt aufweist und die Exzenterscheibe mit einer entsprechend geformten Ausnehmung versehen ist, sodass eine drehsichere Verbindung erhalten wird.

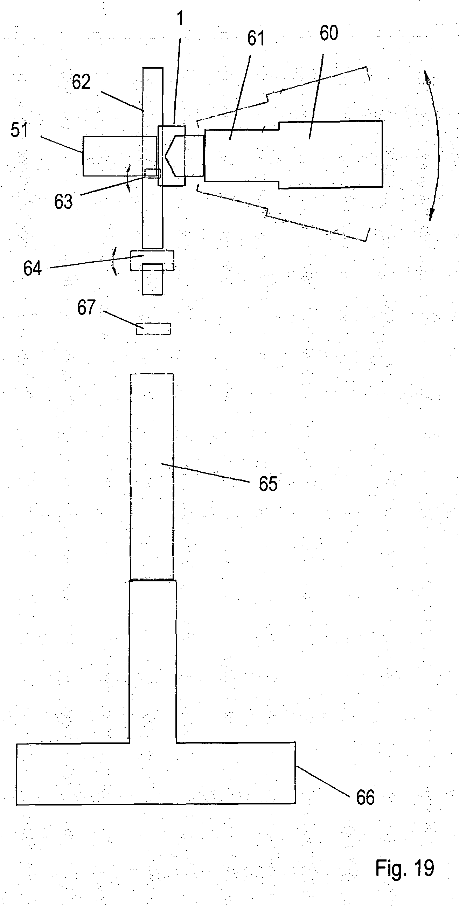

In Figur 19 ist ein typisches Anlagenlayout schematisch in Draufsicht dargestellt, in dem die Schere 1 eingesetzt wird. Das Band wird dabei von Vorratsrollen in einem Abwickler 60 abgezogen und über die Tischplatte 4 der Schere 1 zugeführt. Die mit dem Band bewickelten Rollen werden dafür im Abwickler 60 eingehängt und ausgewickelt. Dabei wird das zu verarbeitende Band, beispielsweise eine kombinierte Cordbahn, von einer Zwischenlage getrennt, die als Folie, aus Leinen oder ähnlichem hergestellt ist, die dazu dient, ein Verkleben des üblicherweise gummierten Bandes zu verhindern. Der Abwickler kann dabei als Einfachabwickler ausgebildet sein, bei dem nur eine einzige Rolle eingehängt ist, oder auch als Doppelabwickler mit einem Drehtisch zum Einhängen von mindestens zwei Materialrollen, wobei von einer Rolle das Band abgezogen wird, während die andere ausgetauscht werden kann. Anstelle eines Drehtisches kann dabei auch ein Shuttle-Rahmen vorgesehen werden. Die Rolle kann je nach Ausführung direkt im Abwickler aufgehängt werden, oder in einer Kassette angeordnet sein, die in dem Abwickler untergebracht wird. Weitere Ausgestaltungen des Abwicklers sind ebenfalls möglich.

Um verschiedene Schneidwinkel zu realisieren, ist der Abwickler gegenüber der Schere verschwenkbar angeordnet. Dabei ist zwischen Abwickler 60 und Schere 1 ein Tisch 61 vorgesehen, der im Bedarfsfall gemeinsam mit dem Abwickler 60 verschwenkt wird. Das zu verarbeitende Band wird über diesen Tisch 61 in die Schere 1 gezogen. Um den Anfang eines Bandes einer neuen Rolle zur Schere 1 zu transportieren, ist es bekannt, am Anfang des Tisches 61 oder darüber eine nicht dargestellte Förderrichtung vorzusehen. Diese Fördereinrichtung kann beispielsweise eine angetriebene Förderrolle sein.

Mit Hilfe der Schere 1 werden von dem Band Streifen in einer definierten Breite und in einem definierten Winkel abgeschnitten. Alternativ zu einer Schere, die wie die erfindungsgemäße Schere 1 in Form einer Guillotine mit Obermesser und Untermesser aufgebaut ist, können auch andere Typen Verwendung finden. Beispielsweise gibt es Rundmesserscheren mit einem feststehenden Untermesser und einem daran entlangfahrenden Rundmesser sowie Scheren mit einem schnell rotierenden Sägemesser, die ähnlich wie eine Kreissäge aufgebaut sind.

Um nach dem Abschneiden des Streifens den Bandanfang erneut durch die Messeröffnung von der Zuführseite auf die Abtransportseite zu fördern und um die gewünschte Streifenbreite zu ziehen, ist in Zuführrichtung hinter der Messeröffnung bzw. dem Schneidspalt, also auf der Abtransportseite, eine Rückzieheinrichtung 51 angeordnet. Eine Ausgestaltung einer derartigen Rückzieheinrichtung ist beispielsweise in DE 10 113 379 beschrieben.

Anschließend werden die abgeschnittenen Streifen mit ihren an die Schneidkante angrenzenden Kanten wieder miteinander verbunden. Dafür sind an der Abtransportseite der Schere 1 eine oder mehrere Spleißeinrichtungen vorgesehen, die als Überlappspleißer 63 und/oder als Stumpfspleißer 64 ausgebildet sind. Beim Spleißen handelt es sich um ein rein mechanisches Verbinden ohne Zuhilfenahme von Zusatzstoffen, wobei die von der Schere 1 abgeschnittenen Streifen an ihren schmalen Seiten miteinander verbunden werden. Häufig wird dabei ein Überlappspleißer eingesetzt, bei denen die Enden der Streifen überlappend zueinander gelegt werden und durch Druckbeaufschlagung im Überlappspleißer überlappend miteinander verbunden werden. Der Spleißer ist dabei in der Regel verschwenkbar, um die Streifen in verschiedenen Winkeln verarbeiten zu können. Es ist aber auch üblich, feststehende Spleißer vorzusehen.

Während der Überlappspleißer 63 in der Regel direkt an einem hinter einer Messeröffnung 7 angeordneten Hochhalter 53 angeordnet ist, wird der Stumpfspleißer 64 alternativ oder zusätzlich mit einem gewissen Abstand dazu angeordnet, wobei die abgeschnittenen Streifen durch eine Fördereinrichtung 62, wie beispielsweise ein Transportband, zum Stumpfspleißer 64 gefördert werden. Dort werden die Streifen stumpf miteinander verbunden.

Die Fördereinrichtung 62 wird in jedem Fall schrittweise um jeweils eine Streifenlänge vorwärtsbewegt, um die jeweils abgeschnittenen Streifen hintereinander auf der Fördereinrichtung 62 positionieren zu können.

Die wieder miteinander verbundenen Streifen werden über eine optionale Beruhigungsrolle 67 und über eine optionale Belegvorrichtung 65 einem Aufwickler 66 zugeführt. In der Belegvorrichtung 65 können weitere Gummistreifen, beispielsweise bis zu 12 Stück, gleichzeitig auf die miteinander verbundenen Streifen aufgelegt werden. Dabei kann auch eine Einfassung von Außenkanten erfolgen, indem beispielsweise ein Gummistreifen an der Außenkante mit Überstand aufgelegt und um die Kante herumgelegt wird. Damit wird ein an der Außenkante freiliegender Cord ummantelt.

Im Aufwickler 66 werden die miteinander verbundenen Streifen wieder auf Spulen aufgewickelt. In der Regel wird dabei eine Zwischenlage, die ein Verkleben der einzelnen Lagen verhindert, mit aufgewickelt. Für den Aufwickler gibt es verschiedenste Ausführungsformen: Der Aufwickler kann beispielsweise als Einfachaufwickler ausgebildet sein, in dem die miteinander verbundenen Streifen manuell abgelenkt und einer neuen Rolle zugeführt werden müssen, es ist aber auch bekannt, vollautomatische Aufwickler vorzusehen, in denen für das Handling keine Bedienereingriffe notwendig sind.

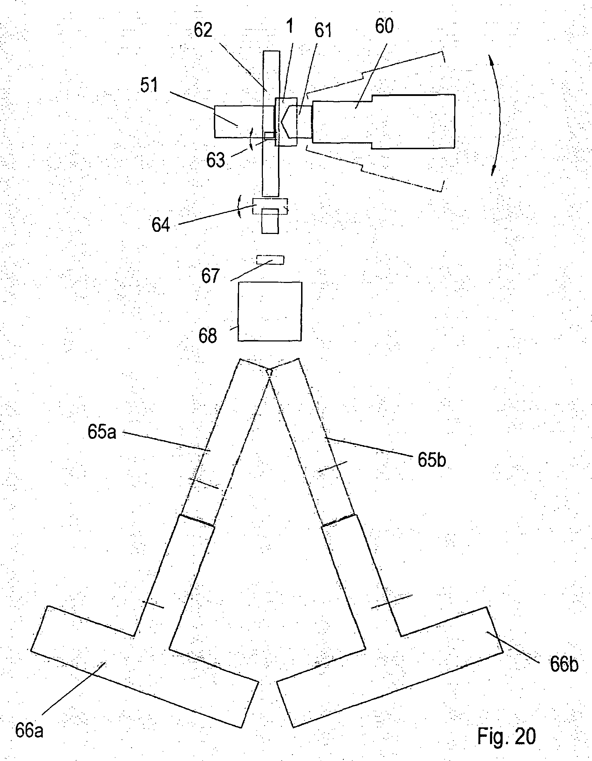

In Fig. 20 ist ein erweitertes Gesamtanlagenlayout dargestellt, bei dem im Anschluss an die Spleißeinrichtung gegebenenfalls hinter einer optionalen Beruhigungsrolle 67 eine Längsschneideeinrichtung 68 vorgesehen ist, durch die die erzeugte Streifenbahn geführt und dabei beispielsweise in zwei Längsbahnen getrennt wird. Diese beiden Längsbahnen werden dann zwei Aufwicklern 66a, 66b zugeführt. Damit wird ein Ausstoß der Anlage erhöht. In der Längsschneidevorrichtung 68, die auch als Slitter bezeichnet wird, finden in der Regel Rundmesser Verwendung.

Zwischen der Längsschneideeinrichtung 68 und dem Aufwicklern 66a, 66b können optional, wie auch im Gesamtanlagenlayout nach Fig. 19, entsprechend aufgebaute Belegevorrichtungen 65a, 65b vorgesehen sein

In den Figuren 19 und 20 sind nur zur Veranschaulichung typische Anlagenlayouts dargestellt. Ein spiegelbildlicher Aufbau ist beispielsweise ebenfalls problemlos möglich, wie auch das Vorsehen zusätzlicher oder das Weglassen einzelner Anlagenelemente.

Durch die erfindungsgemäße Schere, bei der der Antrieb nicht unterhalb der Tischplatte sondern oberhalb des Messerbalkens angeordnet ist und die Antriebswelle exzentrisch in Lagergehäusen gelagert ist, die in Vertikalrichtung unbeweglich gegenüber dem Messerbalken angeordnet sind, während zum Ausgleich eines Drehversatzes Linearführungen vorgesehen sind, kann auf die relativ weichen Kurbelwange verzichtet werden und damit eine sehr steife Konstruktion erhalten werden, die hohe Standzeiten gewährleistet. Dabei ergibt sich ein Schnittverlauf mit hoher Genauigkeit, wobei auch bei einem Messerwechsel beziehungsweise einem Nachschleifen der Messer aufgrund der verstellbaren Tischplatte nur kurze Rüstzeiten erforderlich sind und eine einfache Einstellung der Ausrichtung von Obermesser zu Untermesser möglich ist. Eine Einstellung der Breite des Schneidspalts ist damit schnell und unkompliziert möglich. Zusätzlich kann mit Hilfe von Druckschrauben im Messerbalken ein Verlauf der Schnittkante des Obermessers individuell eingestellt werden, um beispielsweise Ungeradheiten im Messersitz, der durch eine Ausfräsung am Messerbalken gebildet wird, oder am Obermesser selbst auszugleichen. Dabei können beispielsweise Ungeradheiten in der Größenordnung von 0,002 bis 0,02 mm ausgeglichen werden. Diese Druckschrauben können auch dazu benutzt werden, eine Bombierung einzustellen, wobei in der Regel diese so eingestellt wird, dass das Obermesser zum Untermesser im Bereich der seitlichen Kanten leicht überlappt, beispielsweise um ca. 0,01 mm, in der Mitte das Obermesser aber soweit durchgedrückt wird, dass eine Überlappung von beispielsweise +/- 0,03 mm erfolgt. Dabei ist keine Hubverstellung notwendig, vielmehr kann ein fester Arbeitshub eingestellt werden, der durch die Exzentrizität beziehungsweise die Ausbildung der Exzenterscheiben vorgegeben wird.

Die erfindungsgemäße Schere lässt sich dabei zum Schneiden von Cordmaterial, insbesondere von gummierten Bändern beziehungsweise Materialbahnen verwenden, die Textil- und/oder Stahldrähte aufweisen. Durch die Abstreifvorrichtung erfolgt dabei immer ein sicheres Lösen des Bandes nach Abschluss des Schneidvorgangs. Damit ergibt sich ein sehr zuverlässiger Betriebsablauf auch bei unterschiedlichen Bandmaterialien.

Die Erfindung ist nicht auf eine der vorbeschriebenen Ausführungsformen beschränkt, sondern in vielfältiger Weise abwandelbar.

Sämtliche aus den Ansprüchen, der Beschreibung und der Zeichnung hervorgehenden Merkmale und Vorteile, einschließlich konstruktiver Einzelheiten, räumlicher Anordnungen und Verfahrensschritten, können sowohl für sich als auch in den verschiedensten Kombinationen erfindungswesentlich sein.

**Bezugszeichenliste**

| | | | |
|---|---|---|---|
| 1 | Schere | 32 | Hebeleiste |
| 2 | Hauptrahmen | 33 | Klemmleiste |
| 3 | Messerbalken | 34 | Einstelleinrichtung |
| 4 | Tischplatte | 35 | Abdrückelement |
| 5 | Obermesser | 36 | Federelement |
| 6 | Untermesser | 37 | Halterung |
| 7 | Messeröffnung | 38 | Klemmvorrichtung |
| 8 | Antrieb | 39 | Klemmvorrichtung |
| 9 | Antriebswelle | 40 | Druckzylinder |
| 10 | Exzenterscheibe | 41 | Druckzylinder |
| 11 | Exzenterscheibe | 42 | Klemmleiste |
| 12 | Lagergehäuse | 43 | Zweite Einstelleinrichtung |
| 13 | Lagergehäuse | 44 | Zweites Abdrückelement |
| 14 | Linearführung | 45 | Zweites Federelement |
| 15 | Linearführung | 46 | Messeinrichtung |
| 16 | Oberseite | 47 | Druckzylinder |
| 17 | Führungsschiene | 48 | Quereinstelleinrichtung |
| 18 | Führungsschiene | 49 | Druckschraube |
| 19 | Führungswagen | 50 | Band |
| 20 | Führungswagen | 51 | Rückzieheinrichtung |
| 21 | Vertikale Linearführung | 52 | Pfeil |
| 22 | Vertikale Linearführung | 53 | Hochhalter |
| 23 | Lagerstelle | 54 | Pfeil |
| 24 | Lagerstelle | 55 | Pfeil |
| 25 | Niederhalter | 56 | Pfeil |
| 26 | Zylinder | 57 | Gegenhalter |
| 27 | Zylinder | 58 | Laufbänder |
| 28 | Zylinderstößel | 59 | Radiallager |
| 29 | Zylinderstößel | 60 | Abwickler |
| 30 | Abstreifvorrichtung | 61 | Tisch |
| 31 | Bandelement | 62 | Förderband |
| 63 | Überlappspleißer | 69 | Schneidspalt |
| 64 | Stumpfspleißer | 70 | Zuführseite |
| 65 | Belegevorrichtung | 71 | Abtransportseite |
| 66 | Aufwickler | 72 | Schraube |
| 67 | Beruhigungsrolle | | |
| 68 | Längsschneideeinrichtung | | |

## Patentansprüche

1. Schere zum Schneiden eines dünnen, klebrigen Bandes insbesondere aus klebrigen und dünnen Cordmaterial mit Textil- oder/und Stahldrähten, aufweisend:
- einen Hauptrahmen (2),
- einen vertikal am Hauptrahmen (2) bewegbar gelagerten Messerbalken (3) mit einem Obermesser (5),
- eine Tischplatte (4) mit einem Untermesser (6), wobei zwischen Obermesser (5) und Untermesser (6) eine Messeröffnung (7) ausgebildet ist,
- einen Antrieb (8) mit einer Antriebswelle (9) zum Erzeugen einer vertikalen Bewegung des Messerbalkens (3) mit dem Obermesser (5) relativ zum Hauptrahmen (2),
**dadurch gekennzeichnet, dass**
die Antriebswelle (9) parallel zur Längsrichtung des Messerbalkens (3) und des Obermessers (5) verläuft und exzentrisch in mindestens zwei voneinander beabstandeten Lagergehäusen (12, 13) gelagert ist, die über jeweils eine Linearführung (14, 15) horizontal beweglich und vertikal unbeweglich am Messerbalken (3) gelagert sind.

2. Schere nach Anspruch 1, **dadurch gekennzeichnet, dass** die Antriebswelle (9) mit einer Exzenterscheibe (10, 11) drehfest verbunden ist, die im Lagergehäuse (12, 13) drehbar gelagert ist.

3. Schere nach einem der vorhergehenden Ansprüche, **dadurch gekennzeichnet, dass** die Lagergehäuse (12, 13) jeweils an einem Randbereich des Messerbalkens (3) angeordnet sind.

4. Schere nach einem der vorhergehenden Ansprüche, **dadurch gekennzeichnet, dass** die Linearführung (14, 15) mindestens einen Führungswagen (19, 20) und mindestens eine Führungsschiene (17, 18) aufweist, wobei der Führungswagen (19, 20) mit dem Lagergehäuse (12, 13) oder einer Oberseite (16) des Messerbalkens (3) verbunden ist und die Führungsschiene (17, 18) auf der Oberseite (16) des Messerbalkens (3) oder am Lagergehäuse (12, 13) angeordnet ist.

5. Schere nach einem der vorhergehenden Ansprüche, **dadurch gekennzeichnet, dass** der Messerbalken (3) eine Quereinstelleinrichtung (48) insbesondere mit Druckschrauben (49) aufweist, die in Längsrichtung nebeneinander angeordnet sind und in Querrichtung mit dem Obermesser (5) zusammenwirken.

6. Schere nach einem der vorhergehenden Ansprüche, **dadurch gekennzeichnet, dass** die Tischplatte (4) in einer horizontalen Richtung senkrecht zur Messeröffnung (7) schwimmend am Hauptrahmen (2) gelagert ist, wobei eine Relativlage zwischen Tischplatte (4) und Hauptrahmen (2) über eine Einstellvorrichtung (34, 43) einstellbar ist.

7. Schere nach einem der vorhergehenden Ansprüche, **dadurch gekennzeichnet, dass** die Einstellvorrichtung (34, 43) zumindest ein senkrecht zur Messeröffnung (7) wirkendes Federelement (36, 45), insbesondere einen Tellerfederstapel, und ein in entgegengesetzter Richtung wirkendes Abdrückelement (35, 44), insbesondere eine Abdrückschraube, aufweist.

8. Schere nach einem der vorhergehenden Ansprüche, **dadurch gekennzeichnet, dass** die Einstellvorrichtung (34, 43) eine Messeinrichtung (46) aufweist.

## Claims

1. Guillotine cutter for cutting a thin, sticky strip, more particularly of sticky and thin cord material with textile and/or steel wire comprising:
- a main frame (2),
- a blade beam (3) with an upper blade (5) movably supported in vertical manner of the main frame (2),
- a bench plate (4) with a lower blade (6), wherein between the upper blade (5) and the lower blade (6) a blade opening (7) is formed,
- an actuator (8) with an actuating shaft (9) for generating a vertical movement of the blade beam (3) with the upper blade (5) relative to the main frame (2),
**characterised in that**
the actuator shaft (9) extends in parallel to the longitudinal direction of the blade beam (3) and the upper blade (5) and is arranged eccentrically in at least two bearing housings (12, 13) which are at a distance from each other and are each supported via a linear guide (14, 15) on the blade beam (3) in a horizontally movable and vertically immobile manner.

2. Guillotine cutter according to claim 1 **characterised in that** the actuator shaft (9) is connected in a torque-resistant manner to an eccentric disk (10, 11) which is rotatably mounted in the bearing housing (12, 13).

3. Guillotine cutter according to any one of the preceding claims **characterised in that** the bearing housings (12, 13) are each arranged on a marginal area of the blade beam (3).

4. Guillotine cutter according to any one of the preceding claims **characterised in that** the linear guide (14, 15) has at least one guide carriage (19, 20) and at least one guide rail (17, 18), wherein the guide carriage (19, 20) is connected to the bearing housing (12, 13) or an upper side (16) of the blade beam (3) and the guide rail (17, 18) is arranged on the upper side (16) of the blade beam (3) or on the bearing housing (12, 13).

5. Guillotine cutter according to any one of the preceding claims **characterised in that** the blade beam (3) has a transverse adjustment device (48) more particularly with pressure screws (49) which are arranged next to each other in the longitudinal direction and interact with the upper blade (5) in the transverse direction.

6. Guillotine cutter according to any one of the preceding claims **characterised in that** the bench plate (4) is supported in a floating manner on the main frame (2) in a horizontal direction perpendicular to the blade opening (7), wherein a relative position between the bench plate (4) and the main frame (2) can be set by an adjusting device (34, 43).

7. Guillotine cutter according to any one of the preceding claims **characterised in that** the adjusting device (34, 43) has at least one spring element (36, 45), more particularly a plate spring stack, acting perpendicularly to the blade opening (7) and a push-off element (35, 44), in particular a push-off screw acting in the opposite direction.

8. Guillotine cutter according to any one of the preceding claims **characterised in that** the adjusting device (34, 43) comprises a measuring device (46).

## Revendications

1. Ciseaux pour couper un mince ruban adhésif constitué notamment d'un câblé adhésif et mince avec des fils de textile ou/et d'acier, comportant :
- un châssis principal (2),
- une barre porte-lame (3) logée mobile verticalement sur le châssis principal (2) avec une lame supérieure (5),
- une tablette (4) avec une lame inférieure (6), une ouverture de lame (7) étant conçue entre la lame supérieure (5) et la lame inférieure (6),
- un dispositif d'entraînement (8) avec un arbre moteur (9) pour produire un déplacement vertical de la barre porte-lame (3) avec la lame supérieure (5) par rapport au châssis principal (2),
**caractérisés en ce que** l'arbre moteur (9) s'étend parallèlement à la direction longitudinale de la barre porte-lame (3) et de la lame supérieure (5) et **en ce qu'**il est logé dans une position excentrique dans au moins deux logements de palier (12, 13) qui sont à une certaine distance l'un de l'autre et qui sont logés sur la barre porte-lame (3) de façon mobile horizontalement et immobile verticalement par l'intermédiaire d'un guide linéaire (14, 15) à chaque fois.

2. Ciseaux selon la revendication 1, **caractérisés en ce que** l'arbre moteur (9) est assemblé, solidaire en rotation, à un disque d'excentrique (10, 11) qui est logé de manière à pouvoir tourner dans le logement de palier (12, 13).

3. Ciseaux selon l'une des revendications précédentes, **caractérisés en ce que** les logements de palier (12, 13) sont agencés chacun sur un bord de la barre porte-lame (3).

4. Ciseaux selon l'une des revendications précédentes, **caractérisés en ce que** le guide linéaire (14, 15) comporte au moins un chariot de guidage (19, 20) et au moins un rail de guidage (17, 18), le chariot de guidage (19, 20) étant relié au logement de palier (12, 13) ou à un dessus (16) de la barre porte-lame (3) et le rail de guidage (17, 18) étant agencé sur le dessus (16) de la barre porte-lame (3) ou sur le logement de palier (12, 13).

5. Ciseaux selon l'une des revendications précédentes, **caractérisés en ce que** la barre porte-lame (3) comporte un dispositif de réglage transversal (48) notamment avec des vis de serrage (49) qui sont agencées les unes à côté des autres dans la direction longitudinale et qui coopèrent avec la lame supérieure (5) dans la direction transversale.

6. Ciseaux selon l'une des revendications précédentes, **caractérisés en ce que** la tablette (4) est logée sur le châssis principal (2) de manière à flotter dans une direction horizontale perpendiculairement à l'ouverture de lame (7), une position relative entre la tablette (4) et le châssis principal (2) pouvant être réglée par l'intermédiaire d'un dispositif de réglage (34, 43).

7. Ciseaux selon l'une des revendications précédentes, **caractérisés en ce que** le dispositif de réglage (34, 43) comporte au moins un élément formant ressort (36, 45) agissant perpendiculairement à l'ouverture de lame (7), notamment une pile de rondelles-ressorts, et un élément de pression (35, 44) agissant dans la direction opposée, notamment une vis de dégagement.

8. Ciseaux selon l'une des revendications précédentes, **caractérisés en ce que** le dispositif de réglage (34, 43) comporte un dispositif de mesure (46).
